# EUROPEAN PATENT APPLICATION

(11) **EP 1 666 966 A1**
(43) Date of publication of application: **07.06.2006**
(21) Application number: 04028756.7
(22) Date of filing: 03.12.2004
(51) Int. Cl.: G03B 21/16

(54) **Modular rear projection display with insulated plate**

(71) Applicant: Corectronic Corporation, Miao-Li Country, Taiwan (TW)
(72) Inventor: Tseng, Yung-Chuan, c/o Corectronic Corporation, Chu-Nan 350 Miao-Li Country Taiwan (TW); Tsao, Chien-Ming, c/o Corectronic Corporation, Chu-Nan 350 Miao-Li Country Taiwan (TW)
(74) Representative: Wagner, Bernhard Peter

(57) **Abstract**

A combination structure is used in a rear projection display device, for combining a screen module and an optical engine module in the rear projection display device. The combination structure includes a first positioning structure and a second positioning structure, the first positioning structure being disposed under the screen module, the second positioning structure being corresponding to the first positioning structure and disposed above the optical engine module. Wherein, the first positioning structure and the second positioning structure are matched up to be connected together, for the screen module to be directly connected with the optical engine module.

## Description

### FIELD OF THE INVENTION

The present invention relates to a rear projection display device, and more particularly, to a modular rear projection display device and a combination structure used in a rear projection display device.

### BACKGROUND OF THE INVENTION

Among several kinds of popular flat display devices, the rear projection display device has the advantages of saving electricity, a large display area and a cheap price, thus is quite popular in the market.

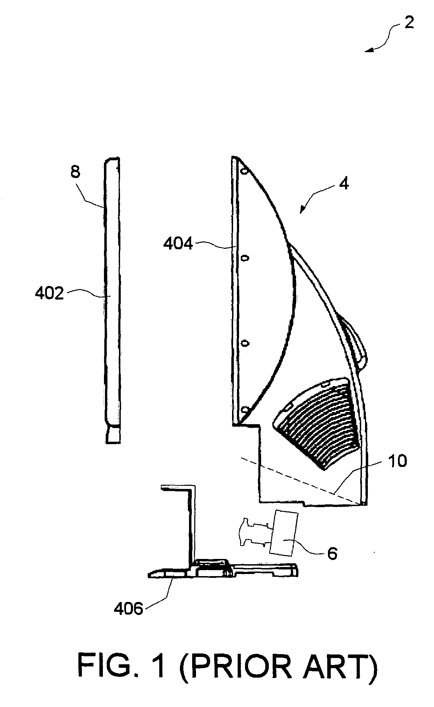

Please refer to FIG. 1, which shows a combination structure 4 of a conventional rear projection display device. The conventional rear projection display device 2 except the optical engine 6 inside, the combination structure 4 of the outer case thereof mainly includes a front frame 402, a rear screen case 404 and a base 406.

In the prior art, the front frame 402, the rear screen case 404 and the base 406 all contact with the screen and are related to the screen size. Such combination has a shortcoming that when producing rear projection display devices 2 of different screen sizes, such as 52", 56", 60" and so on, the front frame 402, the rear screen case 404 and the base 406 of different sizes are needed for matching up. The producer needs more money for making the mode and for development.

In addition, the optical engine 6 is directly installed in the combination structure 4. To prevent heat of the optical engine 6 from being transmitted to the screen shield 8 that is unable to withstand high temperature, an insulated plate is installed inside the rear screen case 404, and hence the difficulty of assembling is increased.

Besides, the location where electronic devices are installed in the rear projection display device must be fireproof to satisfy the safety requirement. In a conventional display device, because electronic devices such as the optical engine 6 and the power supply are disposed in a space between the rear screen case 404 and the base 406, the material of the rear screen case 404 and the base 406 must be an expensive fireproof material for the safety requirement. Therefore, the cost of the rear projection display device is raised.

Thus, the main objective of the present invention is to provide a combination structure used in a rear projection display device, and to solve the above problems by a modular way.

### SUMMARY OF THE INVENTION

One object of the present invention is to combine a modular screen module and an optical engine module together by a combination structure used in a rear projection display device. Optical engine modules of a single standard can be assembled with screen modules of different standards, for saving the development cost and reducing storage.

Another object of the present invention is to separate the space where electronic devices locate from the screen, for reducing the cost of producing the fireproof structure.

The present invention relates to a modular rear projection display device and a combination structure used in a rear projection display device, and combining a modular screen module and an optical engine module in a rear projection display device together by a combination structure. The optical engine module includes an optical engine case and an optical engine disposed in the optical engine case. The screen module includes a screen case, a screen shield and a reflective mirror. The combination structure includes a first positioning structure and a second positioning structure.

An insulated plate is installed under the screen module and near the optical engine module. A hole is disposed in the insulated plate for the light beams projected by the optical engine module to pass upwardly. A supporting base is disposed above the optical engine module and near the screen module.

The first positioning structure is disposed under the screen module, and can be a plurality of wedges disposed on the lower surface of the insulated plate.

The second positioning structure is corresponding to the first positioning structure, and is disposed above the optical engine module. The second positioning structure can be a plurality of grooves on the upper surface of the supporting base.

The first positioning structure is corresponding to the second positioning structure for the screen module to be directly combined on the optical engine module. Wherein, the wedges are corresponding to the grooves and are distributed in a matrix along the projection direction. Thereby, the screen module can be combined with the optical engine module more firmly.

Further, the groove has a groove wall near the rear side of the rear projection display device. A second screw hole is disposed in the groove wall and extends transversely. The second screw hole is opened inside and outside the groove wall. The wedge is corresponding to the second screw hole including the first screw hole extending transversely. Wherein, a screw is screwed into the second screw hole and the first screw hole for connecting the groove and the wedge firmly.

Therefore, a modular screen module and an optical engine module can be combined together through a first positioning structure and a second position structure by using a combination structure used in a rear projection display device. Thus, optical engine module of a single standard can be matched up with screen module of different standards, for saving the development cost and reducing storage of the optical engine module.

Preferred embodiments and detailed techniques about the present invention are illustrated accompanied with drawings in the following.

### BRIEF DESCRIPTION OF THE DRAWINGS

FIG. 1 shows a combination structure in a conventional rear projection display device.
FIG. 2 is an exploded diagram showing the combination structure of the present invention.
FIG. 3 shows the assembly of the combination structure of the present invention.

### DETAILED DESCRIPTION OF THE PREFERRED EMBODIMENT

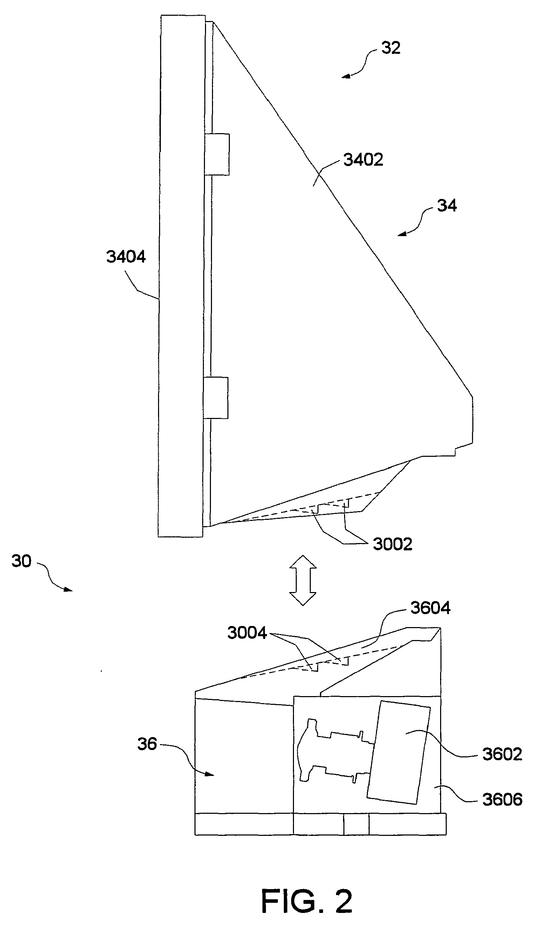

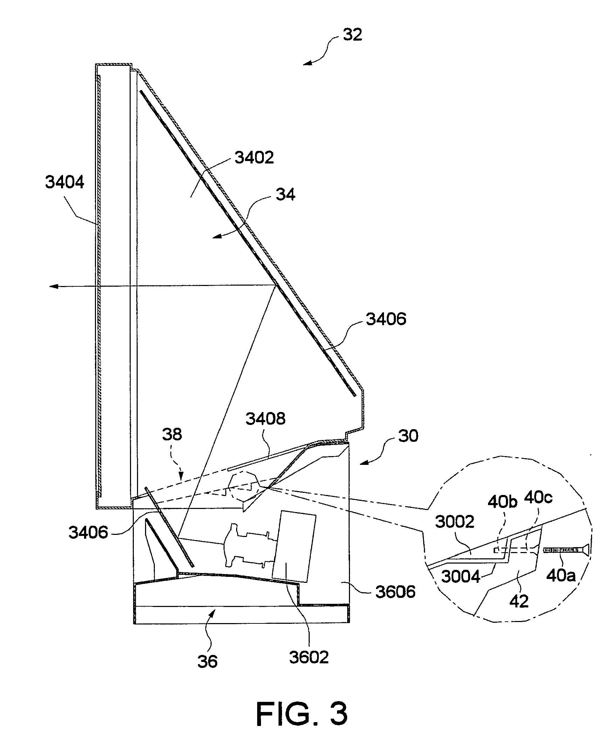

Please refer to FIG. 2 and FIG. 3. FIG. 2 is an exploded diagram of the combination structure 30 of the invention. FIG. 3 is the assembly diagram of the combination structure 30 of the invention. The present invention relates to a modular rear projection display device 32 and a combination structure 30 used in a rear projection display device 32, and combining a modular screen module 34 and an optical engine module 36 in a rear projection display device 32 together by a combination structure 30. Wherein, the optical engine module 36 includes an optical engine case 3606 and an optical engine 3602 disposed in the optical engine case. The screen module 34 includes a screen case 3402, a screen shield 3404 and a reflective mirror 3406.

The screen shield 3404 is disposed in front of the screen case 3402. The reflective mirror 3406 is disposed inside the screen case 3402 for reflecting the image light beams from the optical engine 3602, and projecting the image light beams to the screen shield 3404 in front of the screen case 3402, in order to make the screen shield 3404 display images corresponding to the image light beams.

The combination structure 30 includes a first positioning structure 3002 and a second positioning structure 3004. The first positioning structure 3002 is disposed under the screen module 34. The second positioning structure 3004 is corresponding to the first positioning structure 3002, and is disposed above the optical engine module 36. As shown in the figure, the first positioning structure 3002 is a plurality of wedges, and the second positioning structure 3004 is a plurality of grooves.

The first positioning structure 3002 is corresponding to the second positioning structure 3004 for connecting with the second positioning structure 3004, in order to make the modular screen module 34 directly connected on the modular optical engine module 36. If viewed vertically, the wedges are corresponding to the grooves and are distributed in a matrix along the projection direction. Thereby, the first positioning structure 3002 is combined with the second positioning structure 3004 more firmly.

The combination structure 30 makes the screen module 34 and the optical engine module 36 be produced respectively in a modular way. In a rear projection display device 32, the cost of the optical engine 3602 is the highest. Thus, such module has an advantage that an optical engine module can be assembles with screen modules of different screen sizes. Combination is easily attained by the combination structure 30 of the invention, and the development cost of the optical engine module 36 is saved.

For such modular screen module 34, there can be an insulated plate 3408 under the screen module 34 and near the optical engine module 36. A hole 38 is disposed in the insulated plate 3408 for the light beams projected by the optical engine module 36 to pass upwardly. The first positioning structure 3002 can be disposed on the lower surface of the insulated plate 3408. By the installment of the insulated plate 3408, heat of the optical engine 3602 is prevented from being transmitted upward to structures such as the screen shield 3404 that is unable to withstand high temperature.

Besides, a supporting base 3604 is disposed above the optical engine module 36 and near the screen module 34. The second positioning structure 3004 is disposed on the upper surface of the supporting base 3604.

Further, in FIG. 3 the combination structure 30 is magnified to be viewed in detail. The groove has a groove wall 42 near the rear side of the rear projection display device 32. A second screw hole 40c is disposed in the groove wall 42 and extends transversely. The second screw hole 40c is opened inside and outside the groove wall 42. The wedge is corresponding to the second screw hole 40c including the first screw hole 40b extending transversely. Wherein, a screw 40a is screwed into the second screw hole 40c and the first screw hole 40b for connecting the groove and the wedge firmly, and then the screen module 34 can be fixed on the optical engine module 36.

Strictly speaking, for practicing the modular screen module 34 and the optical engine module 36, except the combination of the wedge and the groove, broadly defined first positioning structure 3002 and second position structure 3004 still includes the edges where the screen module 34 and the optical engine module 36 connects. The edges must have matching shapes and sizes, but are not limited to any shapes or sizes, thus are not described in figures unnecessarily.

Hence, the modular screen module 34 and the optical engine module 36 can be combined together through the first positioning structure 3002 and the second position structure 3004 by using the combination structure 30 in the rear projection display device 32. Thus, the optical engine module 36 of a single standard can be matched up with the screen module 34 of different standards, for saving the development cost and reducing storage of the optical engine module 36. Moreover, electronic devices such as the optical engine are disposed in the optical engine module, and the insulated plate 3408 separates the optical engine module 36 and the screen module 34, consequently only the material of the optical engine module 36 needs to be fireproof, and then the fireproof level for the safety requirement is conformed. Therefore, the cost of producing fireproof structure is lowered.

While a preferred embodiment of the present invention have been described herein for the purpose of illustration, many modifications and changes will become apparent to those skilled in the art. Accordingly, the appended claims are intended to encompass all such modifications and changes as fall within the true spirit and scope of this invention.

## Claims

1. A combination structure used in a rear projection display device, for combining a screen module and a optical engine module in the rear projection display device, comprising:
a first positioning structure disposed under the screen module; and
a second positioning structure corresponding to the first positioning structure and disposed above the optical engine module; wherein
the first positioning structure and the second positioning structure are matched up to be connected together, for the screen module to be directly connected with the optical engine module.

2. The combination structure of claim 1, wherein an insulated plate is installed under the screen module and near the optical engine module, and a hole is disposed in the insulated plate for the light beams projected by the optical engine module to pass , and the first positioning structure is disposed on the lower surface of the insulated plate.

3. The combination structure of claim 2, wherein a supporting base is disposed above the optical engine module and near the screen module, and the second positioning structure is disposed on the upper surface of the supporting base.

4. The combination structure of claim 3, wherein the first positioning structure is a plurality of wedges, and the second positioning structure is a plurality of grooves.

5. The combination structure of claim 4, wherein a second screw hole is disposed in the groove wall and extends transversely, the second screw hole being opened inside and outside the groove wall, the wedge being corresponding to the second screw hole including the first screw hole extending transversely, wherein, a screw is screwed into the second screw hole and the first screw hole for fixing the screen module to the optical engine module.

6. The combination structure of claim 4, wherein the wedges are corresponding to the grooves and are distributed in a matrix along the projection direction.

7. The combination structure of claim 1, wherein the optical engine module comprises an optical engine case and an optical engine disposed in the optical engine case, the screen module comprising:
a screen case;
a screen shield, disposed in front of the screen case; and
a reflective mirror, disposed inside the screen case for reflecting the image light beams from the optical engine , and projecting the image light beams to the screen shield in front of the screen case , in order to make the screen shield display images corresponding to the image light beams.

8. A modular rear projection display device, comprising:
a screen module, a first positioning structure being disposed under the screen module; and
an optical engine module, a second positioning structure being corresponding to the first positioning structure and disposed above the optical engine module; wherein
the first positioning structure and the second positioning structure are matched up to be connected together, for the screen module to be directly connected with the optical engine module.

9. The rear projection display device of claim 8, wherein an insulated plate is installed under the screen module and near the optical engine module, and a hole is disposed in the insulated plate for the light beams projected by the optical engine module to pass , and the first positioning structure is disposed on the lower surface of the insulated plate.

10. The rear projection display device of claim 9, wherein a supporting base is disposed above the optical engine module and near the screen module, and the second positioning structure is disposed on the upper surface of the supporting base.

11. The rear projection display device of claim 10, wherein the first positioning structure is a plurality of wedges, and the second positioning structure is a plurality of grooves.

12. The rear projection display device of claim 11, wherein a second screw hole is disposed in the groove wall and extends transversely, the second screw hole being opened inside and outside the groove wall, the wedge being corresponding to the second screw hole including the first screw hole extending transversely, wherein, a screw is screwed into the second screw hole and the first screw hole for fixing the screen module to the optical engine module.

13. The rear projection display device of claim 11, wherein the wedges are corresponding to the grooves and are distributed in a matrix along the projection direction.

14. The rear projection display device of claim 8, wherein the optical engine module comprises an optical engine case and an optical engine disposed in the optical engine case, the screen module comprising:
a screen case;
a screen shield, disposed in front of the screen case; and
a reflective mirror, disposed inside the screen case for reflecting the image light beams from the optical engine , and projecting the image light beams to the screen shield in front of the screen case , in order to make the screen shield display images corresponding to the image light beams.
